# EUROPEAN PATENT APPLICATION

(11) **EP 4 385 776 A1**
(43) Date of publication of application: **19.06.2024**
(21) Application number: 22874959.4
(22) Date of filing: 28.09.2022
(51) Int. Cl.: B60J 1/00

(54) **VEHICLE WINDOW ASSEMBLY AND VEHICLE**

(30) Priority: 28.09.2021 CN 202111145784
(71) Applicant: Fuyao Glass Industry Group Co., Ltd., Fuqing, Fujian 350300 (CN)
(72) Inventor: CHEN, Zhixin, Fuqing, Fujian 350300 (CN); GUAN, Jinliang, Fuqing, Fujian 350300 (CN); ZHANG, Jianming, Fuqing, Fujian 350300 (CN)
(74) Representative: Mewburn Ellis LLP
(86) International application number: PCT/CN2022/122000
(87) International publication number: WO 2023/051574

(57) **Abstract**

A vehicle window assembly and a vehicle are provided in the present disclosure. The vehicle window assembly includes a laminated glass, a fixing member, and a connecting member. The laminated glass, as a primary viewing portion of the vehicle window assembly, has a primary viewing direction. The fixing member is integrally formed and defines multiple fixing grooves arranged at intervals. An opening direction of each of the multiple fixing grooves is opposite to the primary viewing direction. Multiple functional assemblies are fixedly mounted in the multiple fixing grooves respectively. The laminated glass is connected to the fixing member through the connecting member. A wavelength of a signal emitted and/or received by each of the multiple functional assemblies ranges from 380 nm to 1650 nm. The fixing member has a transmittance of at least 92% for a signal in a wavelength range of 380 nm - 1650 nm incident at an angle of incidence of 0°. Since a signal transmission direction of the functional assembly is substantially the same as or opposite to the primary viewing direction, a signal transmittance is increased due to emission or reception through the fixing groove. Meanwhile, the fixing member is integrally formed, is flat in surface, and is connected to the laminated glass through the connecting member, so that the overall strength is relatively large, and the process is less difficult to realize.

## Description

### CROSS-REFERENCE TO RELATED APPLICATION(S)

This application claims priority to Chinese Patent Application No. 202111145784.3, filed September 28, 2021, and entitled "VEHICLE WINDOW ASSEMBLY AND VEHICLE", the entire disclosure of which is hereby incorporated by reference.

### TECHNICAL FIELD

This disclosure relates to the field of vehicle-part-manufacturing technology, and in particular to a vehicle window assembly and a vehicle.

### BACKGROUND

Vehicles have always been one of the important transportation means for people, and the front windshield integrated with an advanced driving assistance system (ADAS) is one of the important research directions to improve the driving experience of the vehicle.

At present, various functional assemblies of ADAS are mostly integrated at one side of the front windshield in the vehicle. However, with more and more additional functions integrated with the front windshield, such as heat insulation, ultraviolet (UV) insulation, electric heating, addition of a shade band, etc., function realization of the functional assembly of the ADAS is affected. If only an ADAS region in the front windshield is adaptively designed, a process required is relatively difficult. In addition, a plastic block may be spliced with the front windshield outside to integrate the functional assembly of the ADAS, but an outer surface is uneven and an overall strength is weak. Moreover, the front windshield integrated with the ADAS has high local optical requirements for the ADAS region. In order to pursue high local optical requirements, a molding difficulty of an entire front windshield increases, a yield is reduced, and a cost is relatively high.

### SUMMARY

A vehicle window assembly is disclosed in the present disclosure, and can solve technical problems of low signal transmittance, relatively weak strength, and great processing difficulty.

In a first aspect, a vehicle window assembly is provided in the present disclosure. The vehicle window assembly includes a laminated glass, a fixing member, and a connecting member. The laminated glass, as a primary viewing portion of the vehicle window assembly, has a primary viewing direction. The fixing member is integrally formed and defines multiple fixing grooves arranged at intervals. An opening direction of each of the multiple fixing grooves is opposite to the primary viewing direction. Multiple functional assemblies are fixedly mounted in the multiple fixing grooves respectively. A wavelength of a signal emitted and/or received by each of the multiple functional assemblies ranges from 380 nm to 1650 nm. The laminated glass is connected to the fixing member through the connecting member. The laminated glass includes at least one thermoplastic interlayer, a first transparent plate, and a second transparent plate. The first transparent plate has a first main surface, a first top side-surface, and a second main surface. The second transparent plate has a third main surface, a second top side-surface, and a fourth main surface. The at least one thermoplastic interlayer is sandwiched between the second main surface and the third main surface. The fixing member has an outer surface and an inner surface. The outer surface of the fixing member is flush with the first main surface. The fixing member is fixedly connected to the first top side-surface and the second top side-surface.

A signal transmission direction of the functional assembly is substantially the same as or opposite to the primary viewing direction, the fixing groove is used for fixedly mounting the functional assembly, and in the primary viewing direction, a thickness of the fixing member defining the fixing groove is smaller than a thickness of the fixing member defining no fixing groove. Therefore, when the functional assembly fixed to the fixing groove emits or receives an electromagnetic wave signal, a signal transmittance is increased due to emission or reception through the fixing groove. Meanwhile, the fixing member is integrally formed, is flat in surface, and is connected to the laminated glass through the connecting member, so that the overall strength is relatively large, and the process is less difficult to realize.

Optionally, the laminated glass has a transmittance of at least 70% in a wavelength range of 380 nm -780 nm. The fixing member has a transmittance of at least 92% for a signal in a wavelength range of 380 nm - 1650 nm incident at an angle of incidence of 0°.

Optionally, the laminated glass has a transmittance of less than or equal to 30% in a wavelength range of 780 nm - 2500 nm.

Optionally, the fixing member includes a body and an extension extending from the body. The multiple fixing grooves are defined in the body. The extension and the laminated glass are at least partially overlapped. A ratio of a length of an overlapped portion of the extension and the laminated glass to a length of the body in a direction perpendicular to the primary viewing direction ranges from 0.1 to 1.

Optionally, the extension is fixedly connected to the second main surface, the third main surface, or the fourth main surface. The connecting member includes an adhesive layer. The laminated glass and the fixing member have overlapped end surfaces. The adhesive layer is disposed, corresponding to the overlapped end surfaces, between the laminated glass and the fixing member to adhere the laminated glass to the fixing member.

Optionally, the fixing member further includes at least one protrusion extending from a side surface of the fixing member close to the laminated glass.

Optionally, in a direction of a splice line between the laminated glass and fixing member, the laminated glass and the fixing member each have a horizontal radius of curvature of not more than 3800 mm and not less than 2200 mm.

Optionally, in a direction perpendicular to the primary viewing direction, a height difference between the first top side-surface and the second top side-surface in is greater than or equal to 2 mm.

Optionally, the connecting member includes a first bonding portion and a second bonding portion. The first bonding portion is disposed on a side surface of the first transparent plate or a side surface of the second transparent plate. The second bonding portion is integrally formed with the fixing member. The first bonding portion is in fit with the second bonding portion to fix the laminated glass and the fixing member.

Optionally, in the primary viewing direction, the fixing member has different thicknesses at different fixing grooves.

Optionally, the vehicle window assembly further includes a functional layer. The functional layer is at least disposed on an inner surface of each of the multiple fixing grooves in the primary viewing direction.

Optionally, the vehicle window assembly further includes a protective layer. The protective layer is disposed on the outer surface of the fixing member in the primary viewing direction.

Optionally, a splice strength of the laminated glass and the fixing member is more than 105 kg.

Optionally, the fixing member is formed by adopting a resin or a resin-based composite material through an injection process, an extrusion process, or a mold pressing process.

Optionally, the fixing member has a strength to withstand an impact of a 227 g steel ball falling from an impact height of 2.5 m without breaking.

Optionally, the fixing member includes a first protrusion. The first protrusion is disposed corresponding to the at least one thermoplastic interlayer. In a direction perpendicular to the primary viewing direction, the first protrusion has a protrusion length less than or equal to 0.5 mm.

Optionally, the fixing member includes a second protrusion. An outer surface of the second protrusion is flush with an outer surface of the first transparent plate or an outer surface of the second transparent plate. An inner surface of the second protrusion is adapted to part of an outer edge of the first transparent plate or part of an outer edge of the second transparent plate.

Optionally, in a direction perpendicular to the primary viewing direction, a height difference between the first top side-surface and the second top side-surface is less than 2 mm.

Optionally, in the direction perpendicular to the primary viewing direction, the height difference between the first top side-surface and the second top side-surface is less than or equal to 50 mm.

In a second aspect, a vehicle is further provided in the present disclosure. The vehicle includes the vehicle window assembly in the first aspect and a vehicle frame. The vehicle window assembly is carried and mounted on the vehicle frame.

### BRIEF DESCRIPTION OF THE DRAWINGS

To describe the technical solutions in implementations of the present disclosure more clearly, the accompanying drawings for use in the implementations are briefly described. Apparently, the accompanying drawings in the following description show merely some implementations of the present disclosure, and those of ordinary skill in the art may obtain other accompanying drawings from these accompanying drawings without creative effort.
FIG. 1 is a schematic top view of a vehicle window assembly provided in an implementation of the present disclosure.
FIG. 2 is a schematic cross-sectional view in FIG. 1 along line I-I.
FIG. 3 is a partial schematic cross-sectional view of in FIG. 1 along line II-II.
FIG. 4 is a partial schematic cross-sectional view of a vehicle window assembly provided in an implementation of the present disclosure.
FIG. 5 is a partial schematic cross-sectional view of a vehicle window assembly provided in another implementation of the present disclosure.
FIG. 6 is a partial schematic cross-sectional view of a vehicle window assembly provided in yet another implementation of the present disclosure.
FIG. 7 is a partial schematic cross-sectional view of a vehicle window assembly provided in yet another implementation of the present disclosure.
FIG. 8 is a partial schematic cross-sectional view of a vehicle window assembly provided in yet another implementation of the present disclosure.
FIG. 9 is a partial schematic cross-sectional view of a vehicle window assembly provided in yet another implementation of the present disclosure.
FIG. 10 is a schematic top view of a vehicle provided in an implementation of the present disclosure.

Description of reference signs of the accompanying drawings: vehicle window assembly - 1, laminated glass - 11, thermoplastic interlayer - 111, first transparent plate - 112, first main surface - 1121, first top side-surface - 1122, second main surface - 1123, second transparent plate - 113, third main surface - 1131, second top side-surface - 1132, fourth main surface - 1133, fixing member - 12, fixing groove - 121, body - 122, extension - 123, first protrusion - 124, second protrusion - 125, connecting member - 13, first bonding portion - 131, second bonding portion - 132, third bonding portion - 133, fourth bonding portion - 134, adhesive layer - 135, functional assembly - 14, functional layer - 15, protective layer - 16, vehicle - 2, vehicle frame - 21.

### DETAILED DESCRIPTION

Technical solutions of implementations of the present disclosure will be described clearly and completely below with reference to accompanying drawings in implementations of the present disclosure. Apparently, implementations described herein are merely some implementations, rather than all implementations, of the present disclosure. Based on implementations of the present disclosure, all other implementations obtained by those of ordinary skill in the art without creative effort shall fall within the protection scope of the present disclosure.

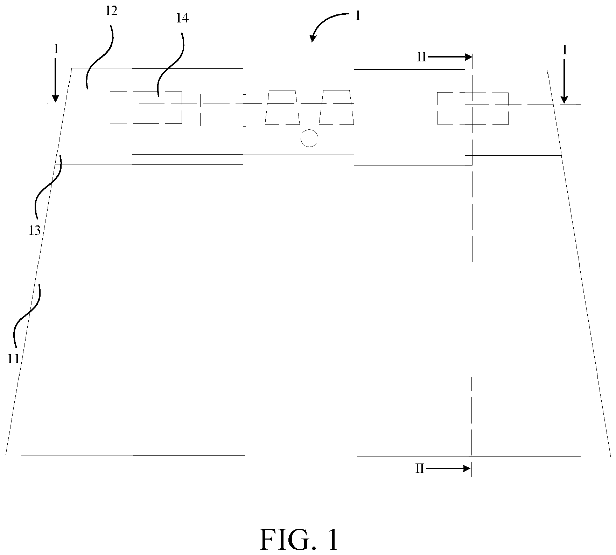

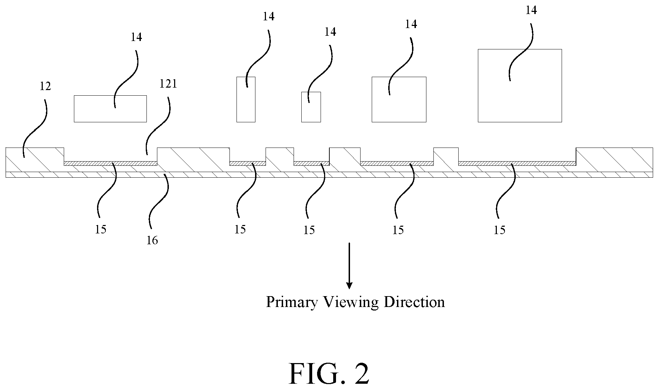

A vehicle window assembly 1 is provided in the present disclosure. Reference can be made to FIG. 1 and FIG. 2 together, where FIG. 1 is a schematic top view of a vehicle window assembly provided in an implementation of the present disclosure, and FIG. 2 is a schematic cross-sectional view in FIG. 1 along line I-I. The vehicle window assembly 1 includes a laminated glass 11, a fixing member 12, and a connecting member 13. The laminated glass 11, as a primary viewing portion of the vehicle window assembly 1, has a primary viewing direction. The fixing member 12 is integrally formed and defines multiple fixing grooves 121 arranged at intervals. An opening direction of each of the multiple fixing grooves 121 is opposite to the primary viewing direction. Multiple functional assemblies 14 are fixedly mounted in the multiple fixing grooves 121 respectively. A wavelength of a signal emitted and/or received by each of the multiple functional assemblies 14 ranges from 380 nm to 1650 nm. The laminated glass 11 is connected to the fixing member 12 through the connecting member 13.

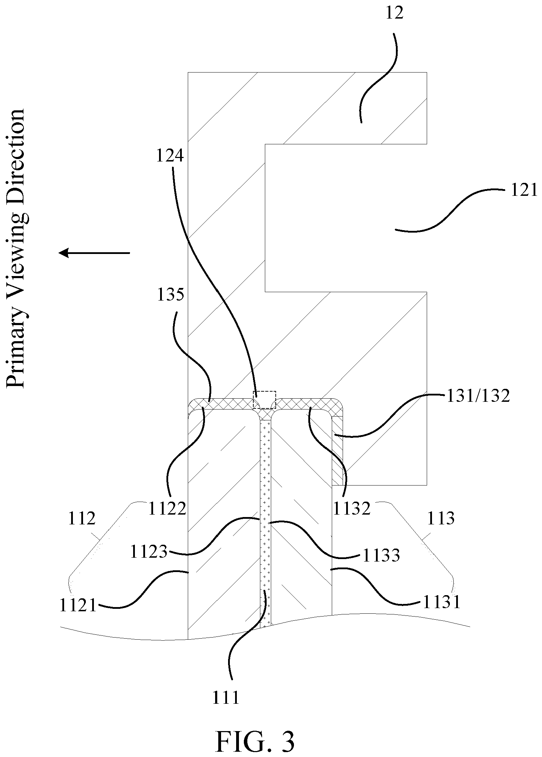

In this implementation, reference can be made to FIG. 3 together, which is a partial schematic cross-sectional view of in FIG. 1 along line II-II. The laminated glass 11 includes at least one thermoplastic interlayer 111, a first transparent plate 112, and a second transparent plate 113. The first transparent plate 112 has a first main surface 1121, a first top side-surface 1122, and a second main surface 1123. The second transparent plate 113 has a third main surface 1131, a second top side-surface 1132, and a fourth main surface 1133. The thermoplastic interlayer 111 is sandwiched between the second main surface 1123 and the third main surface 1131. The fixing member 12 has an outer surface and an inner surface. The outer surface of the fixing member 12 is flush with the first main surface 1121. The fixing member 12 is fixedly connected to the first top side-surface 1122 and the second top side-surface 1132.

The laminated glass 11 has a transmittance of at least 70% in a wavelength range of 380 nm - 780 nm. The fixing member 12 has a transmittance of at least 92% for a signal in a wavelength of 380 nm - 1650 nm incident at angle of incidence of 0°.

Specifically, the vehicle window assembly 1 is applied to a vehicle, and the vehicle window assembly 1 generally has a primary viewing portion. An occupant observes situations outside the vehicle window assembly 1 mainly through the primary viewing portion. The primary viewing direction is a line-of-sight direction of the occupant observing the outside of the vehicle through the vehicle window assembly 1, specifically as illustrated by an arrow in FIG. 2.

In this implementation, the laminated glass 11 serves as the primary viewing portion of the vehicle window assembly 1, and the laminated glass 11 has the transmittance of at least 70% in the wavelength range of 380 nm - 780 nm, that is, a visible light transmittance is greater than or equal to 70%, so that driving safety is ensured. The first transparent plate 112 and the second transparent plate 113 each may be made of inorganic glass, such as soda-lime-silica glass, aluminosilicate glass, lithium aluminosilicate glass, or borosilicate glass; or may be made of organic glass, such as polycarbonate (PC) glass, polymethyl methacrylate (PMMA) glass, etc. The thermoplastic interlayer 111 may be selected from a group consisting of polyvinyl chloride (PVC), polyvinyl butyral (PVB), ethylene vinyl acetate copolymer (EVA), polyacrylate (PA), ionic interlayer (e.g., SentryGlas^{®} Plus (SGP)), polyurethane (PU), etc. The thermoplastic interlayer 111 may have a single-layer structure or a multilayer structure. The multilayer structure may include, for example, a double-layer structure, a three-layer structure, a four-layer structure, a five-layer structure, etc. The fixing member 12 is additionally disposed at the top of the laminated glass 11 through the connecting member 13, so as to carry and mount the functional assembly 14. The fixing member 12 may be formed by adopting a resin or a resin-based composite material through an injection process or a mold pressing process, so that a surface matching accuracy can be greatly improved. Therefore, for the laminated glass 11, performance requirements of the functional assembly 14 are not needed to consider, so that integrity of the laminated glass 11 is maintained, manufacturing efficiency of the laminated glass 11 can be greatly improved, and more composite requirements such as thermal insulation, ultraviolet (UV) insulation, electric heating, sound insulation, addition of a shade band, etc., can be met at a lower cost. Meanwhile, the functional assembly can operate better, and is separated from the laminated glass and do not interfere with each other.

Further, the laminated glass 11 has a transmittance of less than or equal to 30% in a wavelength range of 780 nm - 2500 nm, so as to meet heat insulation requirements. Specifically, the thermoplastic interlayer 111 is tinted, and the first transparent plate 112 is tinted and/or the second transparent plate 113 is tinted. Alternatively, a thermal insulation assembly, such as a thermal insulation coating capable of absorbing infrared rays, a thermal insulation coating capable of reflecting infrared rays, etc., may be disposed between the second main surface 1123 of the first transparent plate 112 and the third main surface 1131 of the second transparent plate 113. Of course, an electric heating assembly, a sound insulation assembly, a head up display assembly, etc., may be disposed between the second main surface 1123 of the first transparent plate 112 and the third main surface 1131 of the second transparent plate 113 to meet the requirements of defrosting, defogging, sound insulation, head up display, etc.

It may be noted that the fixing member 12 may be integrally formed by an injection process or an extrusion process. It can be understood that the fixing member 12 is integrally formed, so that an outer surface of the fixing member 12 is relatively flat, which is beneficial for operation stability of a wiper rubber of the vehicle. In addition, the fixing member 12 is made of a transparent non-glass material, which can effectively improve a strength of the fixing member 12, and solve a technical problem of an insufficient strength when the fixing member 12 is made of a transparent material such as a single sheet of glass. In this implementation, the strength of the fixing member 12 can reach the strength of tempered glass specified in the national standards of the People's Republic of China, that is, the strength of the fixing member 12 without breaking when being impacted by a 227 g steel ball falling from an impact height of 2.5 m.

Meanwhile, the fixing member 12 has higher assembly elasticity and shape plasticity, so that a contradiction between a thickness and a strength of a traditional transparent substrate in a certain thickness range is alleviated, and a process problem of difficult alignment between a splice surface of a hard transparent glass panel and a splice surface of a hard transparent glass panel is solved. It can be understood that in other possible implementations, the fixing member 12 may also be integrally formed by other processes, which is not limited in the present disclosure.

Specifically, openings of the fixing grooves 121 may have different diameters, so that the fixing grooves 12 are suitable for mounting different functional assemblies 14. The functional assembly 14 can emit or receive an electromagnetic wave signal. For example, when the functional assembly 14 is a laser radar, a near-infrared signal in a wavelength range of 800 nm - 1600 nm can be emitted and received. At a correct mounting angle, when the laser radar emits laser with a wavelength of 905 nm or a wavelength of 1550 nm, the signal transmittance may reach more than 85%. When the functional assembly 14 is a camera, a visible light signal (a wavelength of 380 nm - 780 nm) or a near-infrared signal (a wavelength of 780 nm - 1400 nm) can be received. It can be understood that in general, the functional assembly 14 emits an electromagnetic wave signal in a direction substantially the same as the primary viewing direction, and the functional assembly 14 receives an electromagnetic wave signal in a direction substantially opposite to the primary viewing direction.

It can be understood that in this implementation, a signal transmission direction of the functional assembly 14 is substantially the same as or opposite to the primary viewing direction, the fixing groove 121 is used for fixedly mounting the functional assembly 14, and in the primary viewing direction, a thickness of the fixing member 12 defining the fixing groove 121 is smaller than a thickness of the fixing member 12 defining no fixing groove 121. Therefore, when the functional assembly 14 fixed to the fixing groove 121 emits or receives an electromagnetic wave signal, a signal transmittance is increased due to emission or reception through the fixing groove 121. In addition, the functional assembly is easy to be mounted and positioned due to an appearance feature of thinner thickness. Meanwhile, the fixing member 12 is integrally formed, is flat in surface, and is connected to the laminated glass 11 through the connecting member 13, so that the overall strength is relatively large, and the process is less difficult to realize.

In a possible implementation, since the fixing member 12 is made of a transparent non-glass material, an infrared auxiliary agent and additive may be added during a manufacturing process of a resin plate such as a PC plate or a PMMA plate, so that the fixing member 12 can realize a high infrared light transmittance, like a plate with high infrared light transmittance, such as a SABIC PC (121R-21051) plate, a COVESTRO PC (2405-450601) plate, a HY700H-HG PMMA plate, etc. It can be understood that in this implementation, on the premise of realizing a thinner thickness of the fixing member 12, a process of improving the signal transmittance is easier to realize, so that the fixing member 12 has a higher transmittance, a thinner thickness, and a good strength.

In this implementation, the fixing member 12 further includes at least one protrusion extending from a side surface of the fixing member 12 close to the laminated glass 11. For example, referring to FIG. 3 again, the first protrusion 124 is disposed corresponding to the thermoplastic interlayer 111, so as to correspond to a gap between the first transparent plate 112 and the second transparent plate 113. It can be understood that a surface of the laminated glass 11 and a surface of the fixing member 12, which are close to each other, are adapted to each other in shape. Therefore, the connecting member 13 can better connect the laminated glass 11 to the fixing member 12, thereby further improving the connection strength of the laminated glass 11 and the fixing member 12.

Specifically, in order to reserve space for the connecting member 13 and prevent the first protrusion 124 from abutting against the laminated glass 11, a protrusion length of the first protrusion 124 in a direction perpendicular to the primary viewing direction is less than or equal to 0.5 mm. Preferably, the protrusion length of the first protrusion 124 in the direction perpendicular to the primary viewing direction is less than or equal to 0.4 mm. Specifically, the protrusion length of the first protrusion 124 in the direction perpendicular to the primary viewing direction may be 0.37 mm, 0.35 mm, 0.30 mm, which is not limited in the present disclosure.

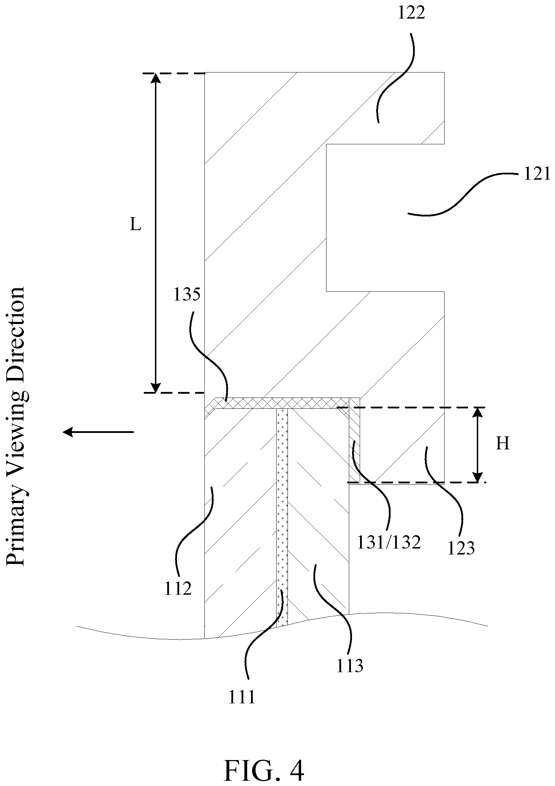

In a possible implementation, reference can be made to FIG. 4 together, which is a partial schematic cross-sectional view of a vehicle window assembly provided in an implementation of the present disclosure. The fixing member 12 includes a body 122 and an extension 123 extending from the body 122. The multiple fixing grooves 121 are defined in the body 122. The extension 123 and the laminated glass 11 are at least partially overlapped. A ratio of a length H of an overlapped portion of the extension 123 and the laminated glass 11 to a length L of the body 122 in the direction perpendicular to the primary viewing direction ranges from 0.1 to 1.

Specifically, due to the extension 123, a contact area between the fixing member 12 and the laminated glass 11 is increased. It can be understood that in this implementation, due to the extension 123, the connecting member 13 can better connect the laminated glass 11 to the fixing member 12, thereby improving the connection strength of the laminated glass 11 and the fixing member 12.

In this implementation, the ratio of the length H of an overlapped portion of the extension 123 and the laminated glass 11 to the length L of the body 122 in the direction perpendicular to the primary viewing direction ranges from 0.1 to 1. Preferably, the ratio of the length H of an overlapped portion of the extension 123 and the laminated glass 11 to the length L of the body 122 in the direction perpendicular to the primary viewing direction may also range from 0.4 to 0.7. Specifically, the ratio of the length H of an overlapped portion of the extension 123 and the laminated glass 11 to the length L of the body 122 in the direction perpendicular to the primary viewing direction may be 0.45, 0.56, 0.63, etc., which is not limited in the present disclosure.

In a possible implementation, referring to FIG. 3 and FIG. 4 together, in the direction perpendicular to the primary viewing direction, the first top side-surface 1122 and the second top side-surface 1132 are substantially flush with each other. Specifically, according to errors in production processes, in the direction perpendicular to the primary viewing direction, a height difference between the first top side-surface 1122 and the second top side-surface 1132 is less than 2 mm.

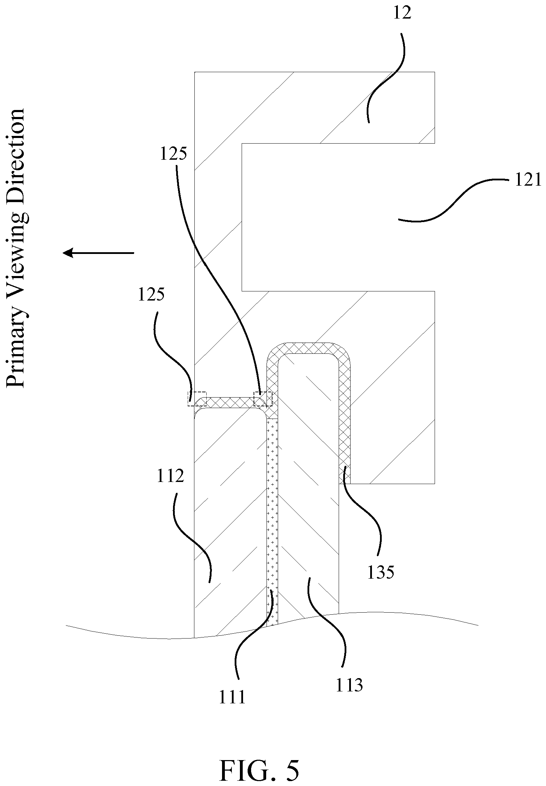

In another possible implementation, referring to FIG. 5 to FIG. 9 together, in the direction perpendicular to the primary viewing direction, a height difference between the first top side-surface 1122 and the second top side-surface 1132 is greater than or equal to 2 mm, which can further improve the connection strength of the laminated glass 11 and the fixing member 12, and more preferably, the height difference between the first top side-surface 1122 and the second top side-surface 1132 is greater than or equal to 5 mm. Considering the integrity of the laminated glass, it is also preferable that in the direction perpendicular to the primary viewing direction, the height difference between the first top side-surface 1122 and the second top side-surface 1132 is less than or equal to 50 mm, and more preferably that the height difference between the first top side-surface 1122 and the second top side-surface 1132 is less than or equal to 20 mm. The height difference between the first top side-surface 1122 and the second top side-surface 1132 may be a portion of the first top side-surface 1122 higher than the second top side-surface 1132, or a portion of the second top side-surface 1132 higher than the first top side-surface 1122.

In this implementation, the fixing member 12 further includes a second protrusion 125 extending from a side surface of the fixing member 12 close to the laminated glass 11, and is adapted to a side surface of the first transparent plate 112 or a side surface of the second transparent plate 113.

Specifically, this implementation is the same as the previous implementation in that, a surface of the laminated glass 11 and a surface of the fixing member 12, which are close to each other, are adapted to each other in shape, so that the connecting member 13 can better connect the laminated glass 11 to the fixing member 12.

It can be understood that this implementation is different from the previous implementation in that, as illustrated in FIG. 5, since the second protrusion 125 corresponds to the side surface of the first transparent plate 112 or the side surface of the second transparent plate 113, the second protrusion 125 is adapted to an outer edge of the first transparent plate 112 or an outer edge of the second transparent plate 113 in shape. In other words, an outer surface of the second protrusion 125 is flush with an outer surface of the first transparent plate 112 or an outer surface of the second transparent plate 113, and an inner surface of the second protrusion 125 is adapted to part of an outer edge of the first transparent plate 112 or part of an outer edge of the second transparent plate 113. That is, the inner surface of the second protrusion 125 and the part of the outer edge of the first transparent plate 112 or the part of the outer edge of the second transparent plate 113 are both smooth in shape. It can be understood that due to this arrangement, the connection strength of the laminated glass 11 and the fixing member 12 can be further improved, and there is a smooth transition between the outer surface of the laminated glass 11 and the outer surface of the fixing member 12, so that the overall surface of the vehicle window assembly 1 is flat.

It can be understood that in this implementation, the length of the second protrusion 125 in the direction perpendicular to the primary viewing direction is not limited in the present disclosure, as long as the second protrusion 125 is avoided from damaging the laminated glass 11.

Next, a fixed connection between the extension 123 and the second main surface 1123, the third main surface 1131, or the fourth main surface 1133 will be described in detail.

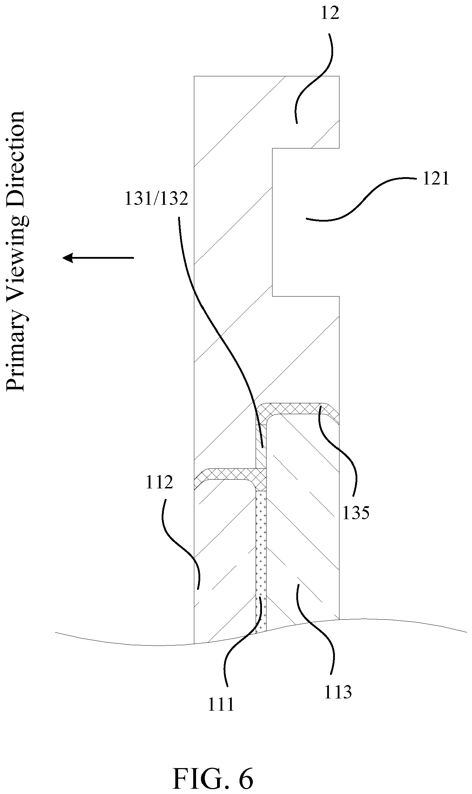

In a possible implementation, reference can be made to FIG. 3 to FIG. 6 together, where FIG. 6 is a partial schematic cross-sectional view of a vehicle window assembly provided in yet another implementation of the present disclosure. The connecting member 13 includes a first bonding portion 131 and a second bonding portion 132. The first bonding portion 131 is disposed on a side surface of the first transparent plate 112 or a side surface of the second transparent plate 113. The second bonding portion 132 is integrally formed with the fixing member 12. The first bonding portion 131 is in fit with the second bonding portion 132 to fix the laminated glass 11 and the fixing member 12.

Specifically, the first bonding portion 131 and the second bonding portion 132 are a corresponding combination. For example, the first bonding portion 131 is a slot, and the second bonding portion 132 is a buckle. The second bonding portion 132 is embedded in the first bonding portion 131 and is fixed to the first bonding portion 131 by means of snap-in connection. For another example, the first bonding portion 131 is a magnetic member, and the second bonding portion 132 is made of a magnetic material. When the second bonding portion 132 abuts against the first bonding portion 131, the first bonding portion 131 is fixed to the second bonding portion 132 due to a magnetic attraction force generated between the first bonding portion 131 and the second bonding portion 132. For yet another example, the first bonding portion 131 is a bonding adhesive, and the second bonding portion 132 is a bondable component. When the second bonding portion 132 abuts against the first bonding portion 131, the first bonding portion 131 is fixed to the second bonding portion 132 due to a bonding force generated between the first bonding portion 131 and the second bonding portion 132. It can be understood that the corresponding combination of the first bonding portion 131 and the second bonding portion 132 is not limited in the present disclosure.

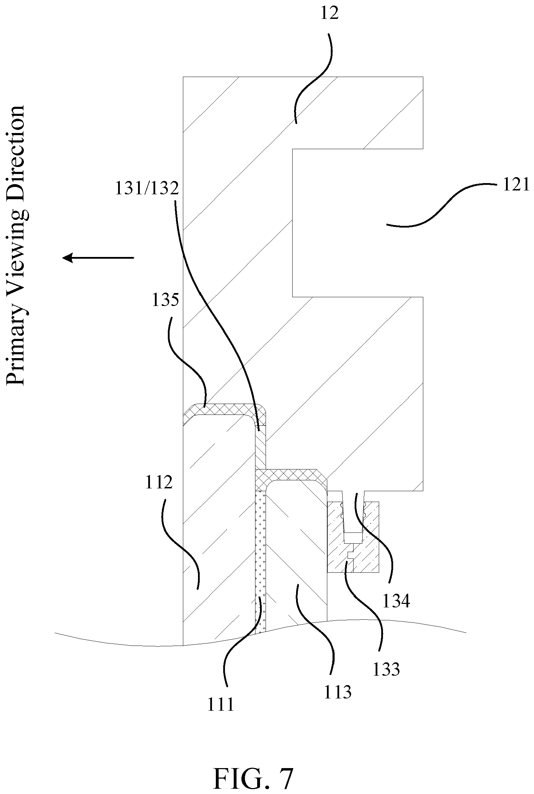

In a possible implementation, reference can be made to FIG. 7 together, which is a partial schematic cross-sectional view of a vehicle window assembly 1 provided in yet another implementation of the present disclosure. Specifically, in this implementation, as illustrated in FIG. 7, in a direction perpendicular to the primary viewing direction, the first transparent plate 112 is higher than the second transparent plate 113. The first bonding portion 131 is disposed on a side surface of the first transparent plate 112 close to the second transparent plate 113. The connecting member 13 further includes a third bonding portion 133 and a fourth bonding portion 134. The third bonding portion 133 is disposed on a side surface of the second transparent plate 113 away from the first transparent plate 112. The fourth bonding portion 134 extends from the fixing member 12. When the fourth bonding portion 134 is in fit with the third bonding portion 133, the laminated glass 11 and the fixing member 12 are firmly fixed.

In this implementation, in a direction of a splice line between the laminated glass 11 and the fixing member 12, the laminated glass 11 and the fixing member 12 each have a horizontal radius of curvature of not more than 3800 mm and not less than 2200 mm. Therefore, on the premise of ensuring the splice strength of the laminated glass 11 and the fixing member 12, a surface of the fixing member 12 in a direction from the splice line to a vehicle roof is optimized to have a certain transition uniformity, and optical surface accuracy of an electromagnetic-wave-signal window on the fixing member 12 is optimized. Specifically, a radius of curvature of a surface of the fixing member 12 and a radius of curvature of a surface of the laminated glass 11 on both sides of the splice line in a range of ±100 mm each are more than 2500 mm, so as to avoid an insufficient strength caused by sharp bending of the surface of the laminated glass 11 or sharp bending of the surface of the fixing member 12. It can be understood that in this implementation, the splice strength of the laminated glass 11 and the fixing member 12 is more than 105 kg.

It may be noted that the so-called horizontal radius of curvature in the splice line direction may refer to a bending degree, in an extension direction, of a connection line between the laminated glass 11 and the fixing member 12 as illustrated in FIG. 1. The so-called horizontal radius of curvature in the splice line direction may also be understood as a bending degree, in a direction perpendicular to the laminated glass 11 inwardly or outwardly, of the connection line between the laminated glass 11 and the fixing member 12 as illustrated in FIG. 1. The splice strength refers to the following. The vehicle window assembly 1 is disposed on a metal-plate frame, and the metal-plate frame is in fit with an outer edge of the vehicle window assembly 1 in shape. A load is applied to a geometric center of the vehicle window assembly 1. An area of the load is 200 mm * 200 mm. An increment of the load is 5 kg each time. When the load applied to the vehicle window assembly 1 causes a first crack or splice failure of the vehicle window assembly 1, a total weight of the loads is the splice strength.

It can be understood that in other possible implementations, the number and form of the connecting members 13 are not limited in the present disclosure, as long as the fixed connection between the laminated glass 11 and the fixing member 12 is not affected.

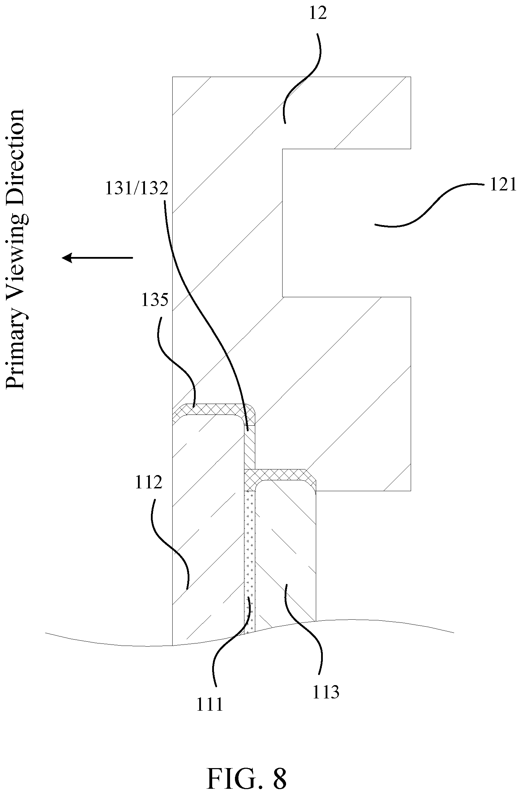

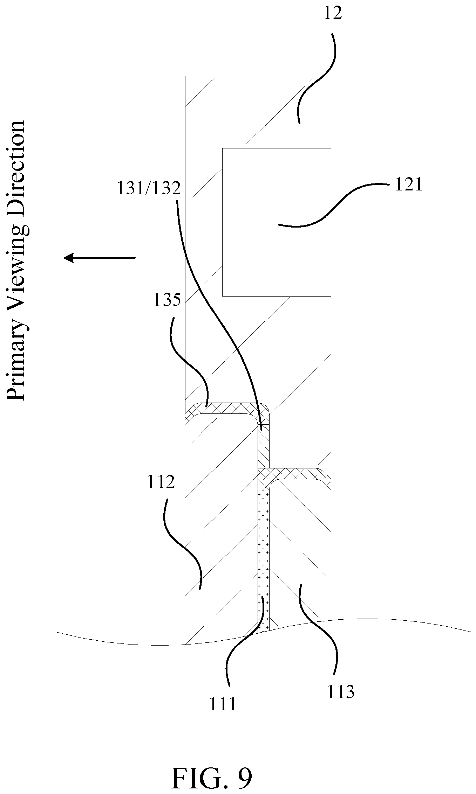

Referring to FIG. 3 to FIG. 7 again, in the direction perpendicular to the primary viewing direction, the first transparent plate 112 and the second transparent plate 113 may be different in height. Correspondingly, the fixing member 12 may also have different shapes, the first bonding portion 131 may also have different positions, and the second bonding portion 132 may also have different positions. Specifically, reference can be made to FIG. 8 and FIG. 9 together, where FIG. 8 is a partial schematic cross-sectional view of a vehicle window assembly 1 provided in yet another implementation of the present disclosure, and FIG. 9 is a partial schematic cross-sectional view of a vehicle window assembly 1 provided in yet another implementation of the present disclosure. It can be understood that the shape of the laminated glass 11 and the shape of the fixing member 12 are not limited in the present disclosure, as long as the connection strength of the fixing member 12 and the laminated glass 11 is not affected.

In a possible implementation, referring to FIG. 2 again, in the primary viewing direction, the fixing member 12 has different thicknesses at different fixing grooves 121. Specifically, a direction of each functional assembly 14 emitting or receiving an electromagnetic wave signal is substantially the same as or opposite to the primary viewing direction, and different functional assemblies 14 correspondingly emit or receive electromagnetic wave signals at different frequencies. Therefore, in the direction perpendicular to the primary viewing direction, different fixing grooves 121 have different thicknesses, which correspond to different functional assemblies 14, so that the signal transmittance is optimized on condition that the strength of the fixing member 12 is ensured to the maximum extent.

For example, when the functional assembly 14 is a radar, the thickness of the corresponding fixing groove 121 in the primary viewing direction may be less than 1.8 mm. When the functional assembly 14 is a multifunctional camera (in German: Multifunktionskamera, MFK), the thickness of the corresponding fixing groove 121 in the primary viewing direction may be about 2.5 mm. When the functional assembly 14 is a rain sensor (RS), the thickness of the corresponding fixing groove 121 in the primary viewing direction may be about 3 mm.

It can be understood that in this implementation, the transmittance of the electromagnetic wave signal is optimized. In other words, when the electromagnetic wave signal is incident at an angle of incidence of 0°, the transmittance of the electromagnetic wave signal is 92% or more, and preferably 95% or more. When the electromagnetic wave signal is incident at an angle of incidence of 66°, the transmittance of the electromagnetic wave signal is 80% or more, and preferably 85% or more.

In a possible implementation, referring to FIG. 2 again, the vehicle window assembly 1 further includes a functional layer 15. The functional layer 15 is disposed on a surface of the fixing member 12, and the surface of the fixing member 12 at least includes an inner surface of the fixing groove 121 in the primary viewing direction.

Specifically, in order to further improve the electromagnetic signal transmission efficiency of the fixing member 12, the functional layer 15, such as an infrared light anti-reflection layer, a visible light anti-reflection layer, an anti-fog layer, a transparent conductive oxide layer for heating, etc., is disposed on the surface of the fixing member 12, and the surface of the fixing member 12 at least includes the surface of the fixing groove 121 in the primary viewing direction. It can be understood that the functional layer 15 may be formed by magnetron sputtering, or spraying, or film coating.

In a possible implementation, referring to FIG. 2 again, the vehicle window assembly 1 further includes a protective layer 16. The protective layer 16 is disposed on the outer surface of the fixing member 12 in the primary viewing direction.

Specifically, in order to improve physical properties of the fixing member 12, the protective layer 16 is further disposed on the outer surface of the fixing member 12 in the primary viewing direction, that is, on a surface of the fixing member 12 facing the outside in the primary viewing direction. In this implementation, the abradability of the protective layer 16 is that after the protective layer is abrased with 100 revolutions, a haze of the protective layer 16 is less than 2%.

In a possible implementation, referring to FIG. 3 to FIG. 9 again, the connecting member 13 includes an adhesive layer 135. The laminated glass 11 and the fixing member 12 have overlapped end surfaces. The adhesive layer 135 is disposed, corresponding to the overlapped end surfaces, between the laminated glass 11 and the fixing member 12 to adhere the laminated glass 11 to the fixing member 12.

Specifically, the laminated glass 11 may also be connected to the fixing member 12 through the adhesive layer 135. It can be understood that the adhesive layer 135 has a certain adhesiveness, which can play a buffering role between the laminated glass 11 and the fixing member 12, thereby further improving the connection strength of the laminated glass 11 and the fixing member 12.

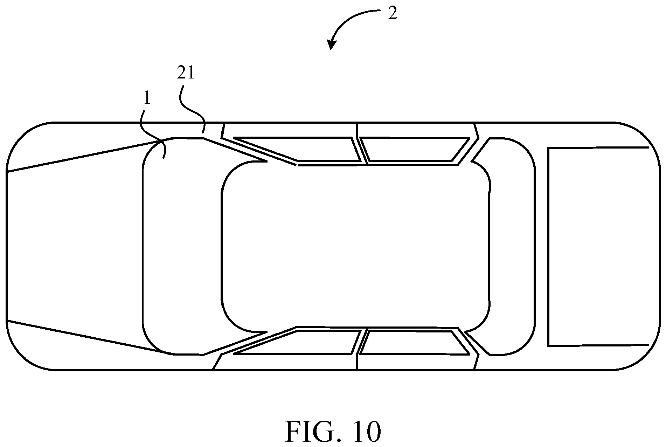

A vehicle 2 is further provided in the present disclosure. Reference can be made to FIG. 10 together, which is a schematic top view of a vehicle provided in an implementation of the present disclosure. The vehicle 2 includes the vehicle window assembly 1 as described above and a vehicle frame 21. The vehicle window assembly 1 is carried and mounted on the vehicle frame 21. Specifically, for the vehicle window assembly 1, reference can be made to the above description, which will not be repeated herein.

The principles and implementations of the present disclosure are elaborated with specific examples herein. The above illustration of implementations is only used to help to understand core ideas of the present disclosure. At the same time, for those ordinary skill in the art, according to ideas of the present disclosure, there will be changes in specific implementations and application scope. In summary, contents of this specification may not be understood as limitation on the present disclosure.

## Claims

1. A vehicle window assembly, comprising a laminated glass, a fixing member, and a connecting member, wherein the laminated glass, as a primary viewing portion of the vehicle window assembly, has a primary viewing direction, the fixing member is integrally formed and defines a plurality of fixing grooves arranged at intervals, an opening direction of each of the plurality of fixing grooves is opposite to the primary viewing direction, a plurality of functional assemblies are fixedly mounted in the plurality of fixing grooves respectively, a wavelength of a signal emitted and/or received by each of the plurality of functional assemblies ranges from 380 nm to 1650 nm, and the laminated glass is connected to the fixing member through the connecting member; and
the laminated glass comprises at least one thermoplastic interlayer, a first transparent plate, and a second transparent plate, the first transparent plate has a first main surface, a first top side-surface, and a second main surface, the second transparent plate has a third main surface, a second top side-surface, and a fourth main surface, the at least one thermoplastic interlayer is sandwiched between the second main surface and the third main surface, the fixing member has an outer surface and an inner surface, the outer surface of the fixing member is flush with the first main surface, and the fixing member is fixedly connected to the first top side-surface and the second top side-surface.

2. The vehicle window assembly of claim 1, wherein the laminated glass has a transmittance of at least 70% in a wavelength range of 380 nm -780 nm, and the fixing member has a transmittance of at least 92% for a signal in a wavelength range of 380 nm - 1650 nm incident at an angle of incidence of 0°.

3. The vehicle window assembly of claim 1, wherein the laminated glass has a transmittance of less than or equal to 30% in a wavelength range of 780 nm - 2500 nm.

4. The vehicle window assembly of claim 1, wherein the fixing member comprises a body and an extension extending from the body, the plurality of fixing grooves are defined in the body, the extension and the laminated glass are at least partially overlapped, and a ratio of a length of an overlapped portion of the extension and the laminated glass to a length of the body in a direction perpendicular to the primary viewing direction ranges from 0.1 to 1.

5. The vehicle window assembly of claim 4, wherein the extension is fixedly connected to the second main surface, the third main surface, or the fourth main surface, the connecting member comprises an adhesive layer, the laminated glass and the fixing member have overlapped end surfaces, and the adhesive layer is disposed, corresponding to the overlapped end surfaces, between the laminated glass and the fixing member to adhere the laminated glass to the fixing member.

6. The vehicle window assembly of claim 4, wherein the fixing member further comprises at least one protrusion extending from a side surface of the fixing member close to the laminated glass.

7. The vehicle window assembly of claim 1, wherein in a direction of a splice line between the laminated glass and the fixing member, the laminated glass and the fixing member each have a horizontal radius of curvature of not more than 3800 mm and not less than 2200 mm.

8. The vehicle window assembly of claim 1, wherein in a direction perpendicular to the primary viewing direction, a height difference between the first top side-surface and the second top side-surface in is greater than or equal to 5 mm.

9. The vehicle window assembly of claim 1, wherein the connecting member comprises a first bonding portion and a second bonding portion, the first bonding portion is disposed on a side surface of the first transparent plate or a side surface of the second transparent plate, the second bonding portion is integrally formed with the fixing member, and the first bonding portion is in fit with the second bonding portion to fix the laminated glass and the fixing member.

10. The vehicle window assembly of claim 1, wherein in the primary viewing direction, the fixing member has different thicknesses at different fixing grooves.

11. The vehicle window assembly of claim 1, further comprising a functional layer, wherein the functional layer is at least disposed on an inner surface of each of the plurality of fixing grooves in the primary viewing direction.

12. The vehicle window assembly of claim 1, further comprising a protective layer, wherein the protective layer is disposed on the outer surface of the fixing member in the primary viewing direction.

13. The vehicle window assembly of claim 1, wherein a splice strength of the laminated glass and the fixing member is more than 105 kg.

14. The vehicle window assembly of claim 1, wherein the fixing member is formed by adopting a resin or a resin-based composite material through an injection process, an extrusion process, or a mold pressing process.

15. The vehicle window assembly of claim 1, wherein the fixing member has a strength to withstand an impact of a 227 g steel ball falling from an impact height of 2.5 m without breaking.

16. The vehicle window assembly of claim 6, wherein the fixing member comprises a first protrusion, the first protrusion is disposed corresponding to the at least one thermoplastic interlayer, and in a direction perpendicular to the primary viewing direction, the first protrusion has a protrusion length less than or equal to 0.5 mm.

17. The vehicle window assembly of claim 6, wherein the fixing member comprises a second protrusion, an outer surface of the second protrusion is flush with an outer surface of the first transparent plate or an outer surface of the second transparent plate, and an inner surface of the second protrusion is adapted to part of an outer edge of the first transparent plate or part of an outer edge portion of the second transparent plate.

18. The vehicle window assembly of claim 1, wherein in a direction perpendicular to the primary viewing direction, a height difference between the first top side-surface and the second top side-surface is less than 2 mm.

19. The vehicle window assembly of claim 8, wherein in the direction perpendicular to the primary viewing direction, the height difference between the first top side-surface and the second top side-surface is less than or equal to 50 mm.

20. A vehicle comprising the vehicle window assembly of any one of claims 1 to 19 and a vehicle frame, wherein the vehicle window assembly is carried and mounted on the vehicle frame.
